# EUROPEAN PATENT APPLICATION

(11) **EP 1 643 335 A2**
(43) Date of publication of application: **05.04.2006**
(21) Application number: 05256177.6
(22) Date of filing: 03.10.2005
(51) Int. Cl.: G06C 1/00

(54) **System and method for designing building structures with associated estimates and schedules**

(30) Priority: 01.10.2004 US 956902
(71) Applicant: Graphisoft S.E., Graphisoft Park 1 1031 Budapest (HU)
(72) Inventor: Freeman, Clay, Budapest 1065 (HU); Nummelin, Olli, Helsinki 00680 (FI)
(74) Representative: Legg, Cyrus James Grahame

(57) **Abstract**

A system and method for designing and scheduling building construction is provided. The system includes a three dimensional design system that generates three dimensional design data using one or more elements in a spatial tree structure. One or more recipes are associated with each element, where each recipe has one or more associated method components and each method component has one or more associated resource components. A cost estimate system generates cost estimate data using the recipes, and a schedule system generates schedule data using the recipes.

## Description

### FIELD OF THE INVENTION

The present invention pertains to the field of building design and construction, and more particularly to a system and method for designing building structures that allows scheduling and estimating to be generated from the building design model instead of requiring such steps to be performed independently.

### BACKGROUND OF THE INVENTION

Systems and methods for designing building structures and other items are known in the art. Such prior art systems and methods allow three dimensional models to be generated with user-defined components and features, or with components and features selected from templates. In this manner, a model of the final building structure or item can be created.

Such prior art systems and methods do not provide construction sequence data, though. Thus, scheduling for the construction of such structures and items must be performed independently, after the model has been completed. Likewise, while materials can be associated with elements of the models, such models only allow master material lists to be generated. When a large building or other item is being designed, such master material lists may be useful for cost estimating purposes but require additional independent analysis for determining when materials need to be ordered, in what units, and other associated information.

### SUMMARY OF THE INVENTION

In accordance with the present invention, a system and method for designing building structures with associated estimates and schedules are provided that overcome known problems with designing and constructing building structures.

In particular, a system and method for designing building structures with associated estimates and schedules are provided that allow estimates and schedules to be generated based on the design.

In accordance with an exemplary embodiment of the present invention, a system for designing and scheduling building construction is provided. The system includes a three dimensional design system that generates three dimensional design data using one or more elements in a spatial tree structure. One or more recipes are associated with each element, where each recipe has one or more associated method components and each method component has one or more associated resource components. A cost estimate system generates cost estimate data using the recipes, and a schedule system generates schedule data using the recipes.

The present invention provides many important technical advantages. One important technical advantage of the present invention is a system and method for designing and scheduling construction that allows estimates for materials and schedules to be generated using the building design data, such that the estimate and schedule data does not need to be independently generated.

Those skilled in the art will further appreciate the advantages and superior features of the invention together with other important aspects thereof on reading the detailed description that follows in conjunction with the drawings.

### BRIEF DESCRIPTION OF THE DRAWINGS

FIGURE 1 is a diagram of a system for integrated five dimensional analysis of construction costs, schedules and risk analysis in accordance with an exemplary embodiment of the present invention;

FIGURE 2 is a diagram of a system for generating scheduling data and estimates in accordance with an exemplary embodiment of the present invention;

FIGURE 3 is a diagram of a system for optimizing resource planning in accordance with an exemplary embodiment of the present invention;

FIGURE 4 is a flow chart of a method for designing buildings in accordance with an exemplary embodiment of the present invention;

FIGURE 5 is a diagram of a user interface allowing modification of the location tree in accordance with an exemplary embodiment of the invention;

FIGURE 6 is a diagram of a user interface providing an option to select a location similar to the process of selecting a layer during the creation of the model, in accordance with an exemplary embodiment of the present invention;

FIGURE 7 is a work breakdown structure in accordance with an exemplary embodiment of the present invention;

FIGURES 8A AND 8B are a diagram of a process showing creation of a construction zone in accordance with an exemplary embodiment of the present invention;

FIGURE 9 is a method for creating options in accordance with an exemplary embodiment of the present invention

FIGURE 10 is a schedule in accordance with an exemplary embodiment of the present invention; and

FIGURE 11 is a playback application in accordance with an exemplary embodiment of the present invention.

### DETAILED DESCRIPTION OF PREFERRED EMBODIMENTS

In the description that follows, like parts are marked throughout the specification and drawings with the same reference numerals, respectively. The drawing figures might not be to scale, and certain components can be shown in generalized or schematic form and identified by commercial designations in the interest of clarity and conciseness.

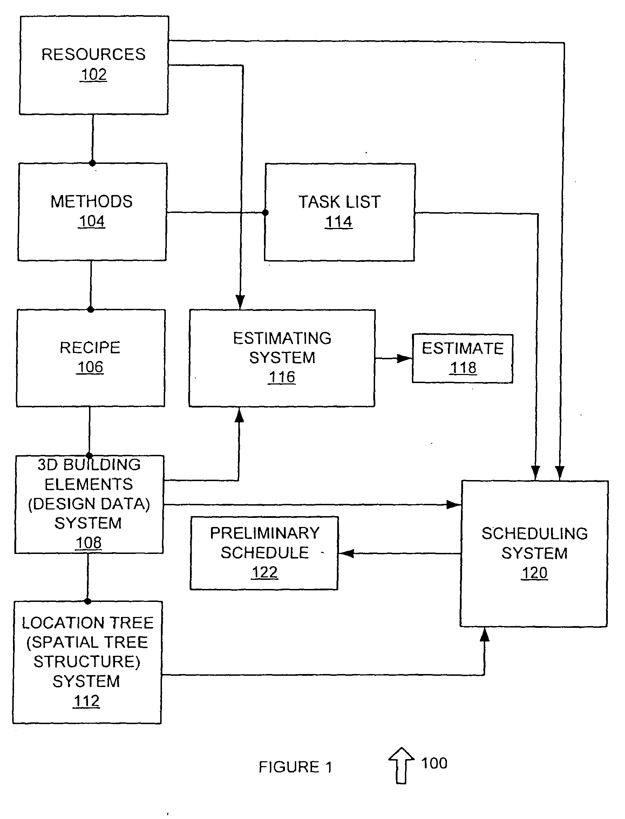

FIGURE 1 is a diagram of a system 100 for integrated five dimensional analysis of construction costs and risk analysis in accordance with an exemplary embodiment of the present invention. System 100 allows architectural models to be designed to assist with estimating costs and generating schedules for construction of buildings or items, such as sports arenas, airports, or other projects.

System 100 includes exemplary data elements, such as resources 102, methods 104, and recipes 106. These data elements are used to define a three-dimensional building or item design. In one exemplary embodiment, three dimensional building elements system 108 providing design data can include a three dimensional architectural or construction drawing or three dimensional views such as perspective or axonometric views assembled from such elements that is used to plan for the construction of a building or item. Location tree system 112 provides a spatial tree structure for each of the elements that allows the relationship between elements to be readily determined, and can include a construction zone structure and other suitable data interfaces with three dimensional building elements system 108 to provide design data to identify the spatial location and relationship of elements that are used to construct a building or item. Likewise, each element is associated resources 102, methods 104, and recipes 106.

Resources 102 describe items that are required for each element, such as materials, labor, equipment, subcontractors, maintenance, or other items that can be defined based on consumption of predetermined units, such as volumes of plaster or concrete, man hours for painting or carpentry, sheets of drywall or plywood, numbers of nails, tubes of caulk, cartons of tile, linear feet of lumber, or other suitable units.

Methods 104 describes construction activities that are needed to create the components associated with an element. In one exemplary embodiment, each method associated with an element can be linearly ordered as a series of steps or procedures that need to be performed. Likewise, alternative methods can also be identified so as to provide flexibility in scheduling, to identify opportunities for optimization, or for other suitable purposes. In one exemplary embodiment, methods can be a collection of resources associated with one or more elements.

Recipes 106 associate the resources and methods of an element with each other and with other elements. Recipes associated with an element can be tangible (such as for construction of a wall, floor, column, wiring, plumbing, or other tangible features) or intangible (such as insurance, permits, inspections, financing, or other intangible features). In one exemplary embodiment, a recipe can be a collection of methods associated with one or more element.

Using elements associated with resources 102, methods 104, and recipes 106, a designer of a building or item can assemble the building or item placing elements in a desired three dimensional spatial tree structure, by defining construction zones associated with each element, or in other suitable manners.

Using the data structures previously described, such as elements with associated recipes, methods, and resources, scheduling and estimating for construction purposes can be readily performed. In one exemplary embodiment, estimating system 116 obtains elements and resources from resources 102 and three dimensional building elements system 108 and provides design data and generates an estimate 118. Estimate 118 can include estimates of materials that will be required between initiation and completion of the element, construction labor resources that will be required to assemble the materials, and other suitable resource and estimate data.

Likewise, task list 114 can receive data from methods 104 and provide task list data to scheduling system 120 for element association and location, and the generation of methods and resources needed for specific task lists. In combination with resources 102 and three dimensional building elements system 108, scheduling system 120 can provide element association, location and methods in task lists, identify resources, and generate a preliminary schedule 122.

In operation, system 100 allows architectural and construction designs to be made using elements that have associated recipes, methods, and resources. These recipes, methods, and resources allow elements to be defined such that any required materials, labor, or other requirements for assembling the element in relationship to other elements can be determined. Likewise, location tree system 112 provides spatial tree structures and construction zones that allows the interrelationship between elements to be determined, as well as allowing the recipes, methods, and resources associated with the elements in the three dimensional elements system 108 to be coordinated for the generation of scheduling and resource data in association with the generation of design data. In this manner, the scheduling and resource requirements for a building or item can be determined in conjunction with the design of the building or item and not as separate processes that are performed after the building or item is designed. System 100 thus allows conflicts between elements based upon spatial requirements for construction or resources required for construction to be identified, as well as allowing opportunities for optimizing the performance of tasks (such as identifying where work can be performed on elements using labor resources that would otherwise be idle) and use of resources (such as identifying resources that can be used that would otherwise need to be ordered separately, in smaller lots, or at different times). System 100 also allows schedules and estimates to be readily determined as a function of changes in the design of the building or item, as opposed to prior art processes that would require schedules and estimates to be regenerated from scratch.

Scheduling system 120 provides element association and locations, methods, and resources in task lists generates a preliminary schedule by receiving data from resources 102, task list 114, and three dimensional building system 108, so that a schedule can be developed that identifies when material resources, labor resources, subcontract resources, equipment resources, maintenance resources, or other resources that may be defined in resources 102, methods 104, and recipes 106, based on elements and the construction model are required. Preliminary schedule 122 can be generated, and if preliminary schedule 122 indicates that opportunities exist for optimizing or otherwise modifying the schedule to facilitate changes in scheduling, material storage, delivery constraints, labor requirements, or other variables, system 100 can readily generate such data after modifications are made to the three dimensional model of the architectural design.

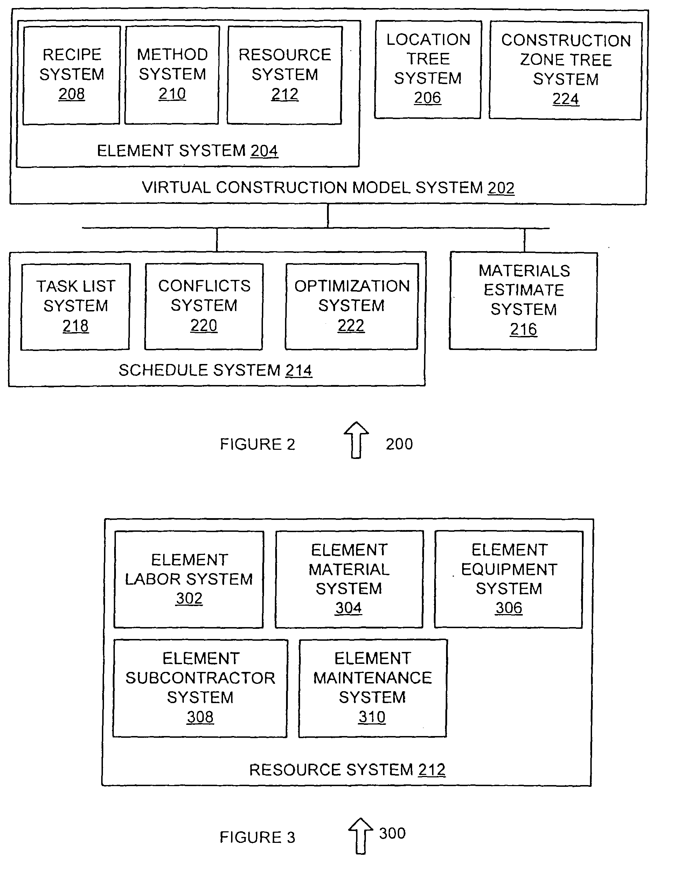

FIGURE 2 is a diagram of a system 200 for generating scheduling data and estimates in accordance with an exemplary embodiment of the present invention. System 200 can be implemented in hardware, software, or a suitable combination of hardware and software, and can be one or more software systems operating on a general purpose processing platform. In one exemplary embodiment, a software system can include one or more lines of code, subroutines, procedures, branches, routines, user readable code, machine readable code, source code, object code, a general purpose system that interfaces with one or more specific purpose systems, logic flows, or other suitable systems. A hardware system can include a general purpose processor, an application specific integrated circuit, a field programmable gate array, a digital signal processor, or other suitable platforms.

System 200 includes virtual construction model system 202, which further includes element system 204, recipe system 208, method system 210, and resource system 212. Likewise, virtual construction model system 202 includes location tree system 206 and construction zone tree system 224.

Virtual construction model system 202 interfaces with schedule system 214 and materials estimate system 216 to generate schedules and materials estimates. Schedule system 214 further includes task list system 218, conflict system 220, and optimization system 222.

Virtual construction model system 202 allows construction models to be assembled in three dimensions using elements that have associated recipes, methods, and resources. The elements are assembled using location tree system 206 and construction zone tree system 224 to allow the location of the elements relative to other elements to be determined as well as to allow the construction activities associated with elements to be determined as they may be affected by other elements in proximity to third elements.

Recipe system 208 allows attributes to be associated with an element. In one exemplary embodiment, recipe system 208 can include resources, properties, parameters, or other data that is used to effectively describe a set of criteria about which the recipes get attached to the elements. For example, a recipe can be tangible or intangible, can be associated with an element automatically, can be attached to the element based on external criteria, changes in schedule, other suitable data, or in other suitable manners. In another exemplary embodiment, a recipe can include a collection of one or more methods.

Method system 210 includes construction activities associated with an element that may be required to assemble and install the element within the three dimensional spatial model. In one exemplary embodiment, method system 210 can include alternative construction activities, such as sequences of activities that can be performed based on availability of resources, conflicts with space and associated areas, or other suitable activities. In this exemplary embodiment, it may be necessary or possible to assemble a component in two or more pieces, where either piece can be assembled at a given time. Based upon the availability of materials, labor, space, and other resources, method system 210 can identify variable or available methods that can be implemented at a given time. In another exemplary embodiment, a method can include a collection of one or more resources.

Resource system 212 generates resource data for an element. In one exemplary embodiment, the resource data can identify physical resources, labor, or other resources that may be required to assemble an element. Likewise, resource system 212 can be used to identify conflicts with resources required for other elements, generate user notifications, and identify resolutions based on available resources, materials, or other data.

Element system 204 allows elements to be associated with other elements in virtual construction model system 202, while maintaining the affiliation of the elements with recipes, methods, and resources associated with the element.

Location tree system 206 allows the location of elements within a construction project to be defined. In one exemplary embodiment, location tree system 206 allows elements to be identified based on user defined or predetermined criteria, such as a building or item in which an element is located, a floor on which an element is located, a feature on the floor in which the elements located, such as a slab, column, wall, ceiling, or other suitable characteristics such as utilities (plumbing, electrical) non-physical resources such as insurance, permits, labor, or other suitable resources.

In this manner, location tree system 206 allows the location of elements to be coordinated so as to allow the elements to be optimized in construction, estimating, and other activities.

Construction zone tree system 224 can be associated with location tree system 206, or can be associated with other suitable elements so as to allow the construction zone requirements for constructing a given element to be identified and coordinated with the construction zone requirements for other elements. In one exemplary embodiment, construction of an element can require large equipment such as cranes, bulldozers or wood working equipment, such that construction activity associated with an element may affect the ability of construction activities to be performed on adjacent elements. Construction zone tree system 224 also provides data for elements that are used to coordinate the scheduling and estimating of elements within a construction project.

Material estimate system 216 receives recipe data, method data, resource data, location tree data, construction zone tree data, and other suitable data from virtual construction model system 202 and generates materials estimate data. In one exemplary embodiment, materials estimates can include data defining the availability of materials to be stored at a site, the shelf life of materials, or other facts or features of materials that determine whether the materials need to be used quickly, can be stored, or may be available from other resources. In one exemplary embodiment, system 200 can be used to reevaluate the current status of a construction site, such as to identify materials that are available that have not been used on different elements due to savings in the use of the materials on the element, delays associated with elements making materials available for use at other elements, or other suitable features.

Schedule system 214 includes task list system 218, conflict system 220, and optimization system 222. Task list system 218 allows task lists associated with elements to be coordinated so as to identify tasks where a conflict may occur. For example, if there are a limited number of plumbing contractor resources or electrical contractor resources, task list system 218 can identify conflicts in regards to whether the number of contracting resources required for all scheduled tasks at a given time is less than the total number needed. Task list system 218 can further identify other conflicts in recipes, methods, resources, locations or construction zones, and generates task list system data as well as alert data for conflicts system 220 and optimization system 222. Task list system 218 can also generate task lists to support daily construction activities, such as associated with individual contractors, individual elements, with delivery or preparation of materials, or other suitable task lists.

Conflict system 220 receives conflict data from task list system 218, recipe system 208, method system 210, resource system 212, location tree system 206, and construction zone tree system 224 and generates modification data for each associated system. In one exemplary embodiment, a conflict can be generated due to unforeseen delays, unavailability of resources, early availability of resources of completion developments, changes in design, or other suitable variables. Conflict system 220 generates one or more prompts that allows a user to identify conflict resolutions, such as areas in which resources, labor resources can be reallocated to avoid congestion in an area where work is being performed, to identify available labor resources to replace labor resources that are unavailable due to sickness or other problems, materials that may be available based on the ability to replace those materials in the construction schedule, or other suitable conflict resolutions.

Optimization system 222 receives recipe data, method data, resource data, location tree data, construction zone tree data, task list data, conflicts data, and other suitable data and determines whether optimization is possible in the construction schedule, design, use of materials, or for other features. In one exemplary embodiment, optimization opportunities can exist even in the absence of conflicts. Likewise, the existence of a conflict can allow an optimization to exist, such as by making resources available that would otherwise not have been available if a conflict had not been created. Optimization system 222 thus allows construction activities to be optimized so as to minimize the amount of time that labor resources are available and unused, to minimize the amount of time when activities are not performed due to the unavailability of building materials, or to otherwise optimize design and construction of the building or item.

Materials estimate system 216 receives data from recipe system 208, method system 210, resource system 212, location tree system 206, construction zone tree system 224, and schedule system 214, and generates materials estimates. In one exemplary embodiment, construction materials can be ordered in advance in large quantities in order to save costs, but may need to be coordinated due to available storage space, the sensitivity of such materials to damage from construction activities or weather, or other variables. Materials estimate system 216 allows materials to be estimated so that quantities of material can be ordered, stored, and used so as to avoid inadvertent over ordering of materials, under ordering of materials, damage to materials, excess cost due to the need to purchase materials on short notice in small quantities, or other variables.

In operation, system 200 allows a building or item to be designed such that the estimation of materials, resources and scheduling of construction tasks can be optimized. System 200 uses elements with associated recipes, methods, and resources to generate a three dimensional model that has a spatial component comprising a location tree and a construction zone tree, and that further allows scheduling to be optimized, conflicts to be identified, task lists to be generated, and materials to be tracked and estimated. In this manner, the same system that is used to design the layout and configuration of the building or item can also be used to generate schedules, material estimates, and perform other functions that would otherwise need to be independently generated.

FIGURE 3 is a diagram of a system 300 for optimizing resource planning in accordance with an exemplary embodiment of the present invention. System 300 includes resource system 212 and element labor system 302, element materials system 304, element equipment system 306, element subcontractor system 308, and element maintenance system 310, each of which can be implemented in hardware, software, or a suitable combination of hardware and software, and which can be one or more software systems operating on a general purpose processing platform.

Element labor system 302 identifies labor associated with an element and a construction design. In one exemplary embodiment, the labor can include the number of laborers required to perform a task, the number of labor hours to perform a task, the type of labor required, the skill level of labor required, whether supervisory labor is required, or other suitable labor data.

Element material system 304 identifies materials required for construction of an element. In one exemplary embodiment, element material system 304 can include materials that are equivalent to other materials such that alternate materials can be used upon availability or unavailability of materials, sequences of materials, units of materials, alternate construction or configurations of materials, or other suitable data.

Element equipment system 306 identifies equipment required that is associated with the creation and assembly of an element in the construction of a building or item. Element equipment system 306 can identify sizes of equipment, physical requirements of equipment such as water, power, cooling, space, or other suitable equipment characteristics. Likewise, element equipment system 306 can provide alternatives for types of equipment where more than one type of equipment can be used for a given element.

Element subcontractors system 308 identifies subcontractor labor as required for an element. In one exemplary embodiment, subcontractor labor can be different from element labor system 302 in that the subcontractor has individual needs for determining lead times, and input into element labor system 302, element material system 304, element equipment system 306, and element maintenance system 310. Likewise, element subcontractor system 308 can be used to identify the availability of subcontractor resources to take the place of element labor system 302 resources or other suitable resources.

Element maintenance system 310 includes one or more element maintenance components for use in assembling and maintaining elements during the construction of a building or item. In one exemplary embodiment, after an element has been assembled, it may be necessary to maintain the element to avoid damage to the element, to ensure that the element is working to provide additional resources to the building or item, such as electrical supply or plumbing supply elements, or other suitable element maintenance.

In operation, system 300 allows resources for elements to be identified so that coordination of element resources can be performed and conflicts and optimization of element resource availability can be controlled.

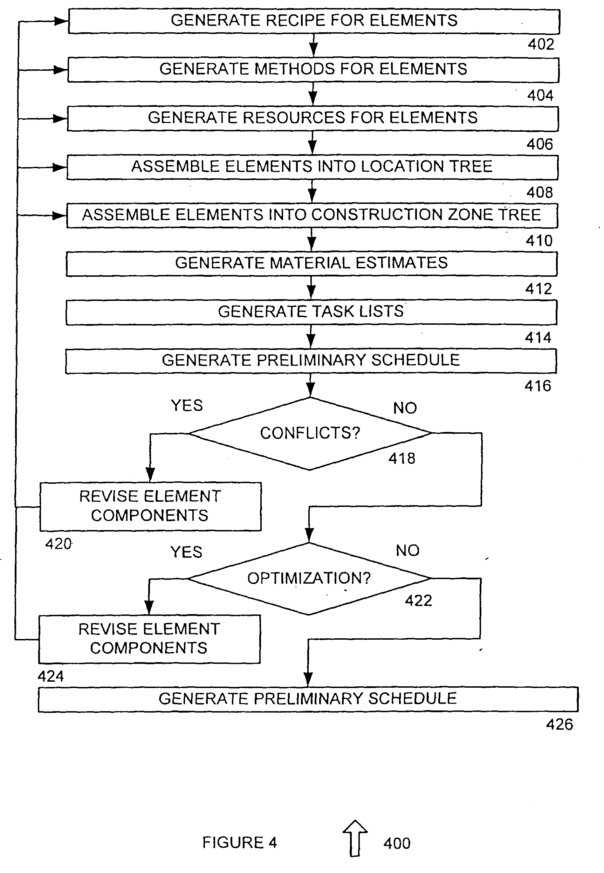

FIGURE 4 is a flow chart of a method 400 for designing buildings in accordance with an exemplary embodiment of the present invention. Method 400 begins 402 where recipes for elements are generated. In one exemplary embodiment, each element may have one or more associated recipes, where a recipe identifies a relationship between methods, resources, or other variables that may be required for construction of the element, including tangible items such as walls or floors, intangible items such as insurance or licensing, or other variables. The method then proceeds to 404.

At 404, methods are generated for recipes associated with the elements. In one exemplary embodiment, common building or item elements may have associated methods for assembling the elements, and can also be coordinated with other methods of a recipe, such as the need to have a foundation laid before wall structural elements can be assembled, the need to have wall structural elements assembled before electrical wiring can be assembled, or other suitable methods. The method then proceeds to 406.

At 406, resources for elements are generated. In one exemplary embodiment, resources can include materials that are required to assemble the element, labor that is required to assemble the element, subcontractor or management resources that may be required, or other suitable resources. The method then proceeds to 408.

At 408, the elements are assembled into a location tree. In one exemplary embodiment, buildings can be designed by assembling elements into a location tree showing the location of elements relative to other elements. As the elements are assembled into a location tree, any necessary coordination between elements can be identified and user prompts can be generated to allow the user to identify how the elements will be related to other elements. For example, as two elements are associated in the location tree, any coordination between the recipes, methods, or resources for the elements can be identified. The method then proceeds to 410.

At 410 the elements are assembled into a construction zone tree. Step 410 can also be performed in conjunction with step 408, or prior to step 408, where suitable. A construction zone tree can include the identification of one or more construction zones in which an element will require subcontractor resources, material resources, labor resources, equipment resources, or other suitable resources in order to be assembled. In addition, user prompts can be generated to identify conflicts with the placement of adjacent elements or other suitable data. The method then proceeds to 412.

At 412, material estimates are generated. In one exemplary embodiment, after the design of a building or item has been completed, material estimates can be generated so as to allow an estimate for the cost of the building or item to be generated, to allow materials to be ordered, or for other suitable purposes. The method then proceeds to 414.

At 414, task lists are generated. In one exemplary embodiment, the task lists can include lists of daily tasks that will be required to be performed by individual laborers, delivery or preparation of materials that will be required, locations for placement of materials and equipment, or other suitable tasks. The method then proceeds to 416.

At 416 a preliminary schedule is generated. In one exemplary embodiment, the preliminary schedule can include material estimates, labor estimates, or other suitable scheduling data that allows the cost and time to construction of the building or item to be identified and generated. The method then proceeds to 418 where it is determined whether there are any conflicts. In one exemplary embodiment, conflicts can include situations where the amounts of material that are needed at one time exceed the ability of the materials to be stored or delivered, requirements for labor that exceed the ability for personnel to be hired or used, requirements for working in spaces that need exclusive use by personnel for individual elements, or other conflicts that could prevent or delay the construction of the building or item. If no conflicts are identified at 418 the method proceeds to 422. Otherwise, the method proceeds to 420 where element components are revised to resolve the conflict. In one exemplary embodiment, it may be determined at 420 that recipes, methods, resources, allocation of or assembly of elements into the location tree, the assembly of the elements into the construction zone tree, or other variables need to be modified. The method then returns to the suitable one of method steps 402 through 410 that allows the conflict to be addressed.

At 422 it is determined whether optimization opportunities exist. In one exemplary embodiment, it may be determined that unused labor resources, equipment resources, material resources, or other resources are available and are not being used while they could be used in other areas or for other tasks. If it is determined that there is no optimization available, the method proceeds to 426 and a preliminary schedule is generated. Otherwise, the method proceeds to 424 where the element components are revised, such as by identifying recipes, methods, resources, location, construction zones or other element where the optimization can be amended to generate new schedules, task lists, estimates, or other suitable data.

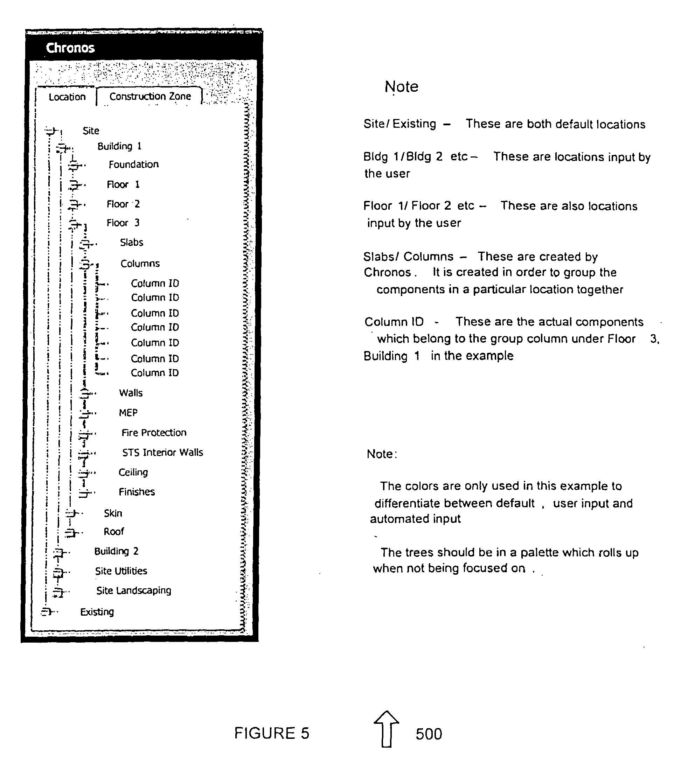

FIGURE 5 is a diagram of a user interface 500 allowing modification of the location tree in accordance with an exemplary embodiment of the invention. The location tree of user interface 500 includes a visual display and provides a method by which the user can create the desired hierarchy for the components in the buildings. The construction zone tree can be used for the sequencing aspects of the project, can allow the user to break the model down into greater detail, and can allow the model to be represented in a construction sequence which can be used for four-dimensional playback. In one exemplary embodiment, the construction zone tree can be directly imported into the scheduling tool and used to schedule the project. At that time, the user can have the option to select the level of granularity in which the construction zone tree should be exported into the scheduling tool, which allows the schedule to be created from the model.

"Site" and "Existing" locations can be provided as default locations in the tree. Components related to "Site" can be run through an estimation system and can also be scheduled, whereas components related to "Existing" can be those for which an existing recipe is automatically linked to them. This configuration will allow for the user to model existing surrounding buildings without having them as part of the estimation.

The user can manually input the locations into the location tree by selecting the "Site" location and selecting "add location." Alternatively, the location tree can be used as a visual representation of the locations and the locations can be entered in a manner similar to the creation of layers. The user can have the option to manipulate the tree using both methods.

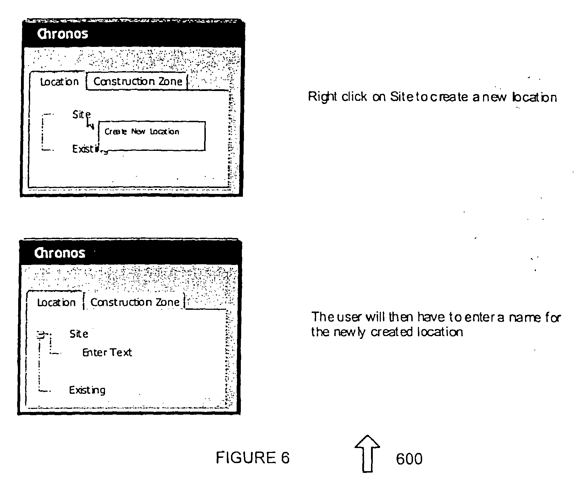

**FIGURE 6** is a user interface 600 providing an option to select a location similar to the process of selecting a layer during the creation of the model, in accordance with an exemplary embodiment of the present invention. The location tree can be generated when selecting the location. Each column can be automatically grouped in the location tree under the specific location and further into the component group "COLUMN." When the user selects the "COLUMN" component group in the tree, the tree can expand and display individual columns which are associated with that location. The user can also have the option to copy a location component to another location, such as from floor to floor. In this exemplary embodiment, when a floor component is copied to another floor, the components can also appear in the three dimensional model.

Creation of locations by automatically reading in story data can be used to allow the tree to determine the starting elevation of the floor which the components are being copied to. There may be more story settings than needed when data is automatically read it, and all the story data for each building can be grouped together, such that it will need to be sorted. Another alternative to sorting is to prompt the user to input a starting elevation when copying floors, to prompt the user to input elevation and height when they are creating the location, or to perform other suitable functions.

A text box can be provided that allows the user to select a location when creating a component. The location tree can appear when selecting a location for component creation. The methods tree can automatically be read from the components recipe, and the user can have the scheduling tool open while creating the model so that the two programs can be exchanging data, the user can upload the scheduling tool database before exporting the data to the scheduling tool, or other suitable processes can be used.

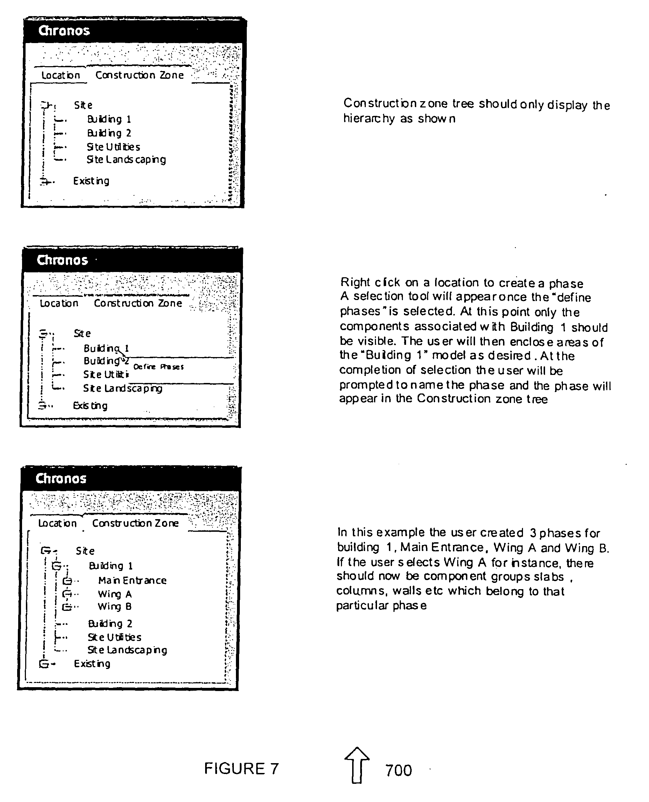

FIGURE 7 is a work breakdown structure 700 in accordance with an exemplary embodiment of the present invention. The user can be provided a suitable number of stages, such as two or more. The first stage can include breaking the locations down into phases. The breakdown into phases can be used as a grouping tool for the scheduling application where scheduling the building itself is broken down into sections. Within a building there may be suitable number of phases, including no phases. In one exemplary embodiment, a phase can be a wing of a building.

The second stage can include one or more definitions by the user of construction zones. A construction zone can be a method which is used to break down or group components in a manner which represents the actual sequence of construction. For example, breakdown into phases can include highlighting a location and generating a dialog box that allows the user to "Define Phases." The model view may display the components related to the location highlighted, or other suitable data can be generated. A drawing tool can then be provided to allow the user to enclose a desired portion of the model. At the completion of the selection, a dialog box can be used that allows the user to name the phase they just created, a new branch of the tree can be created below the location which is being broken into phases and the user can name the phase at the completion of selecting the desired phases belonging to that location, or other suitable procedures can be used. Components which are related to the selected area for the phase can then be grouped under this phase in a separate "Construction Zone Tree."

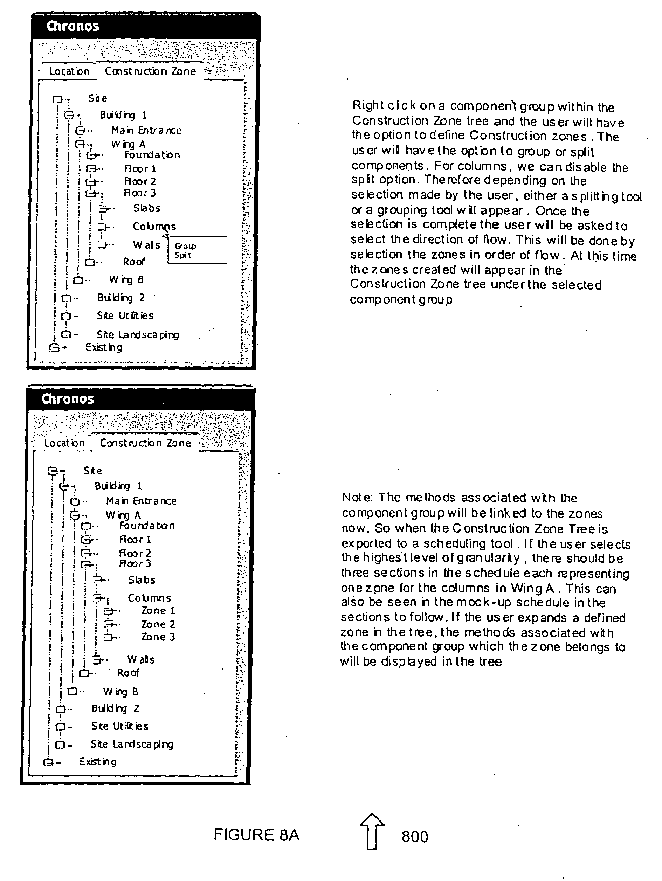

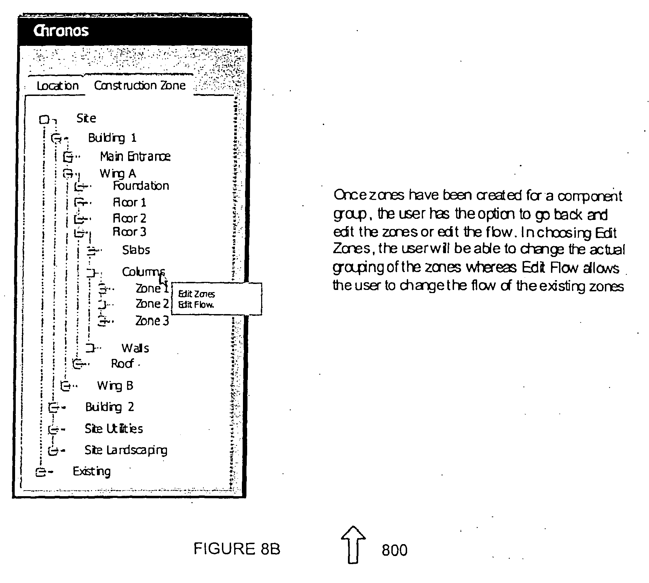

FIGURES 8A AND 8B are a process 800 showing creation of a construction zone in accordance with an exemplary embodiment of the present invention. When the user selects a component group to create a construction zone, the three dimensional window can display the components associated with the phase that the selected component group belongs to. A splitting tool can allow the user to draw a temporary splitting line at the locations where the element should be split. This temporary line can be a polyline or other suitable features. The user can also have the ability to create options of the construction zone tree.

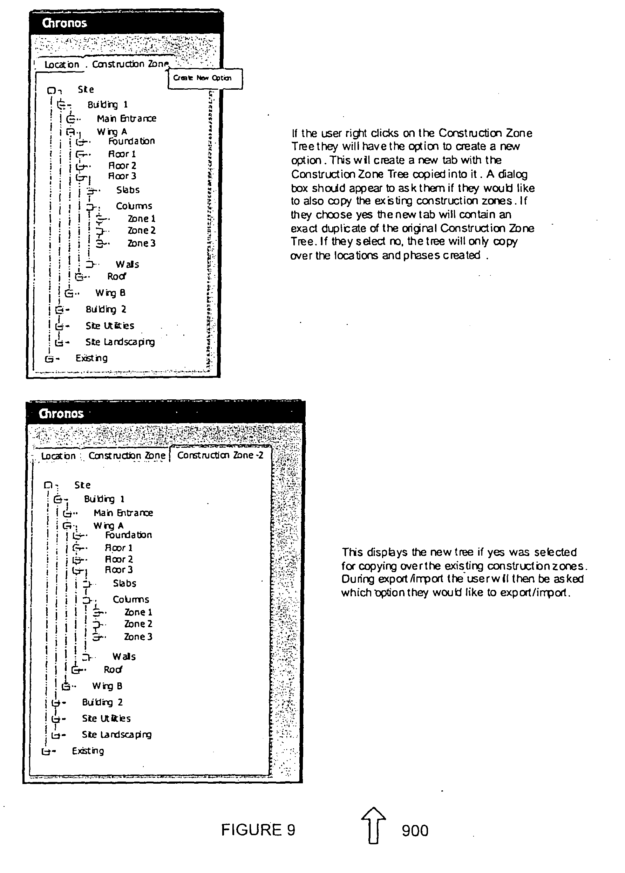

FIGURE 9 is a method 900 for creating options in accordance with an exemplary embodiment of the present invention. Method 900. allows the user to compare milestone dates, critical path items, and other suitable data. In one exemplary embodiment, activities that are in the critical path of each option can be displayed so that they can be compared with other options.

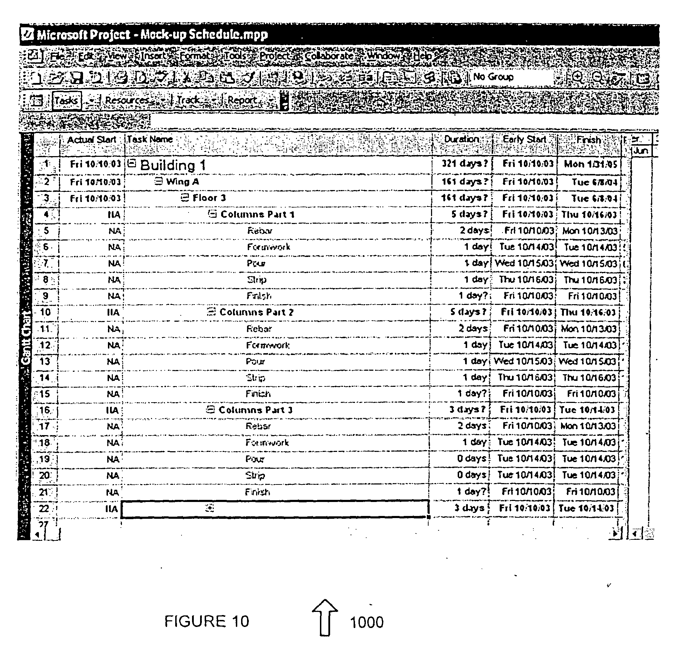

FIGURE 10 is a schedule 1000 in accordance with an exemplary embodiment of the present invention. In one exemplary embodiment, a color scheme can be used to identify recipes, methods, and resources, such as red for items associated with location, green for items associated with phase, blue for items associated with component group, black for items associated with component zone, and magenta for items associated with methods.

In this exemplary embodiment, the user can add durations, create links between the activities, and perform other functions, such as after the data is imported into a scheduling tool. Links can be automatically generated by the methods and order of the construction zone tree, and manual changes can also be allotted where needed, such as for lag or other variables.

After creation of the schedule is complete within the scheduling tool, it can be exported into schedule 1000, where a check function can be performed. For example, if the data is read back into the design system using the same dimensional structure, a location and component group can be assigned to the new activity according to how it was input into the schedule. In this exemplary embodiment, if a new activity was created under "Slab Part 3" it can be associated with the location "building 1", phase "phase A" and component group "Slab".

In another exemplary embodiment, when new activities are created within the scheduling tool they do not need to be imported back to schedule 1000 if they do not have a component that represents them. An option can be generated for the user to add these new items when they are imported into the database, such that the schedule can be provided in the CAD application and can be displayed as a Gantt chart.

The user can be presented with the option to choose the level of granularity at which the model will be displayed during four dimensional playback, such as to select the level of detail at which the model will be displayed in suitable physical units. The user can also select the time' intervals at which the model playback occurs, such as hours, days, weeks or other suitable units, as well as the speed of the playback in seconds per frame.

The user can also define a work type, such as "construct", "demolish", "restoration," "temporary," or other suitable definitions. In defining the work type, the user can also be provided with the option to choose a color for use during playback to be associated with property. In this exemplary embodiment, items linked to a "construct" work type can turn a specified color when an activity start date has begun and remain in view until completion of the playback. These work types can then be linked to component groups or other suitable features.

Models that have few colors can be used to avoid confusion that may be created when more models having a large number of colors are shown during playback. When the user creates the methods in the database, they can be prompted to select a trade responsible for each method, and during playback, the user can have the option to select which trades should be highlighted. In one exemplary embodiment, if no trades are selected then everything can be represented in one color during construction and the critical path can be highlighted. If the user selects a feature, such as plumbing, then the components linked to the selected feature can be highlighted in another color so they stand out.

The user can also have the option to select components that will be transparent during playback, such as by allowing the user to hide or make transparent locations similar to the case with layer attributes. The user can also have the capability to select what part of the model should be displayed during playback. For instance, the user may want to view only one location during playback, multiple locations, or other options. The user can also elect to cut the building, and have only the cut piece of the building displayed during playback. The user can be allowed to change views of the building during playback.

The components which are related to the critical path can be highlighted in a specified color during playback. These components can also be highlighted in the construction zone tree. The workspace surrounding a component can be highlighted. In the immediate area of the component this can be an added item in the components recipe. The user can also be allowed to display construction equipment, scaffolding, or other features.

The user can have the ability to take snapshots of the model during playback, create video files, by selecting the start and end date for the video capture, and to allow the model to remain in view at the completion of the playback.

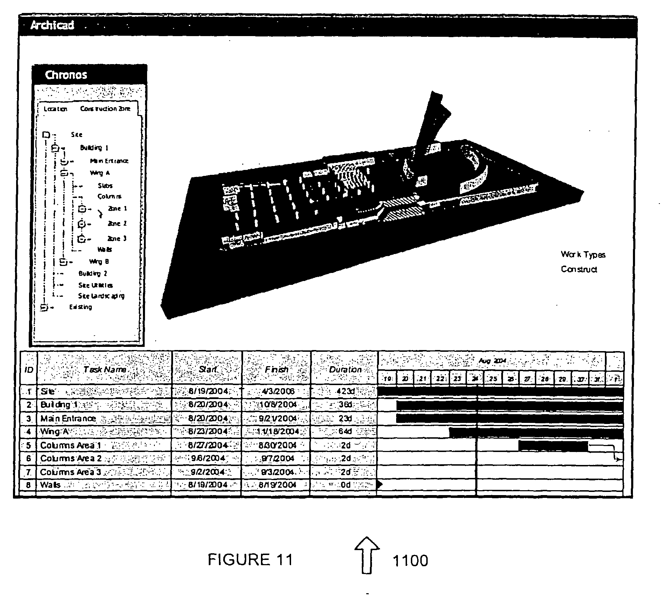

FIGURE 11 is a playback application 1100 in accordance with an exemplary embodiment of the present invention. For the schedule application interface, the Gantt chart can be displayed during playback with the timeline moving as the playback progresses. This can be represented by a vertical line on the Gantt chart which represents the day which applies to the four dimensional playback. The user can have the option to choose the level of granularity at which the Gantt chart is displayed, which can be linked to the level of granularity at which the model is played back. Likewise, the user can have the ability to set the actual date.

Although exemplary embodiments of a system and method of the present invention have been described in detail herein, those skilled in the art will also recognize that various substitutions and modifications can be made to the systems and methods without departing from the scope and spirit of the appended claims.

## Claims

1. A system for designing, estimating and scheduling building construction, comprising:
a three dimensional design system that generates three dimensional design data using one or more elements in a spatial tree structure;
one or more recipes associated with each element, each recipe having one or more associated method components, each method component having one or more associated resource components;
a cost estimate system generating cost estimate data using the recipes; and
a schedule system generating schedule data using the recipes.

2. The system of claim 1 wherein each method component has one or more task lists, and wherein the schedule system generates schedule data using method data, resource data, and the three dimensional design data in the task list.

3. The system of claim 1 wherein the resource components include one or more labor components.

4. The system of claim 1 wherein the resource components include one or more material components.

5. The system of claim 1 wherein the resource components include one or more equipment components.

6. The system of claim 1 wherein the resource components include one or more subcontractor components.

7. The system of claim 1 wherein the resource components include one or more maintenance components.

8. The system of claim 1 wherein a cost estimate system generates cost estimate data at any stage of the modeling.

9. The system of claim 1 wherein the recipes can identify one or more alternative method components based on data received from another recipe.

10. The system of claim 1 wherein the recipes can identify one or more alternative resource components based on data received from another recipe.

11. A method for designing, estimating and scheduling building construction, comprising:
generating three dimensional design data using one or more elements in a spatial tree structure;
associating one or more recipes with each element;
associating one or more methods with each recipe;
associating one or more resources with each method;
estimating costs using the recipes; and
generating a schedule using the recipes.

12. The method of claim 11 further comprising:
associating one or more task lists with each method; and
generating schedule data using method data, resource data, and the three dimensional design data in the task list.

13. The method of claim 11 further comprising associating one or more labor components with one or more resource.

14. The method of claim 11 further comprising associating one or more material components with one or more resource component.

15. The method of claim 11 further comprising associating one or more equipment components with one or more resource components.

16. The method of claim 11 further comprising associating one or more subcontractor components with one or more resource components.

17. The method of claim 11 further comprising associating one or more maintenance components with one or more resource components.

18. The method of claim 11 further comprising generating cost estimate data at a user-selected stage of the modeling.

19. The method of claim 11 further comprising identifying one or more alternative method components based on data received from another recipe.

20. The method of claim 11 further comprising identifying one or more alternative resource components based on data received from another recipe.

21. A method of constructing a building comprising performing the method of any one of claims 11 to 20 and constructing the building according to the resultant schedule.
